(19) Europäisches Patentamt
European Patent Office
Office européen des brevets

(11) **EP 4 582 168 A1**

(12) **EUROPEAN PATENT APPLICATION**
published in accordance with Art. 153(4) EPC

(43) Date of publication:
**09.07.2025 Bulletin 2025/28**

(21) Application number: **23860340.1**

(22) Date of filing: **29.08.2023**

(51) International Patent Classification (IPC):
**B01D 53/04** (2006.01)

(52) Cooperative Patent Classification (CPC):
**B01D 53/04; Y02C 20/40**

(86) International application number:
**PCT/JP2023/031207**

(87) International publication number:
**WO 2024/048578 (07.03.2024 Gazette 2024/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **01.09.2022 JP 2022139534**

(71) Applicant: **NGK Insulators, Ltd.**
**Nagoya-shi, Aichi 467-8530 (JP)**

(72) Inventors:
• **ANDO, Junichi**
**Nagoya-shi, Aichi 467-8530 (JP)**
• **TAKAHASHI, Michio**
**Nagoya-shi, Aichi 467-8530 (JP)**
• **OKUMA, Yusuke**
**Nagoya-shi, Aichi 467-8530 (JP)**
• **IIDA, Kazuki**
**Nagoya-shi, Aichi 467-8530 (JP)**
• **KAN, Hirofumi**
**Nagoya-shi, Aichi 467-8530 (JP)**
• **SHIBAGAKI, Yukinari**
**Nagoya-shi, Aichi 467-8530 (JP)**
• **MAEHARA, Sota**
**Nagoya-shi, Aichi 467-8530 (JP)**

(74) Representative: **MERH-IP Matias Erny Reichl
Hoffmann
Patentanwälte PartG mbB
Paul-Heyse-Straße 29
80336 München (DE)**

(54) **ACIDIC-GAS ADSORPTION DEVICE**

(57) Provided is an acid gas adsorption device that allows an acid gas adsorption part, which has been deteriorated, to be partly replaced so as to achieve a reduction in running cost. An acid gas adsorption device according to an embodiment of the present invention includes: an acid gas adsorption part that allows passage of a fluid in a predetermined direction; and one case. The acid gas adsorption part includes an acid gas adsorption material capable of adsorbing an acid gas. The acid gas adsorption part is divided into at least: a first adsorption portion including an upstream end surface in the direction of passage of the fluid; and a second adsorption portion arranged on a downstream side of the first adsorption portion in the direction of passage of the fluid. The one case houses the first adsorption portion and the second adsorption portion together. The first adsorption portion and/or the second adsorption portion is divided into a plurality of blocks in a direction intersecting with the direction of passage of the fluid.

FIG. 1

## Description

Technical Field

The present invention relates to an acid gas adsorption device.

Background Art

In recent years, an attempt has been made to separate and capture an acid gas in the atmosphere in order to reduce an environmental load. Such acid gas is, for example, carbon dioxide (hereinafter sometimes referred to as "$CO_2$"), which is a main cause of global warming. As a typical example of such attempt, a Carbon dioxide Capture, Utilization and Storage (CCUS) cycle has been known. As a carbon dioxide adsorption device to be used for such separation and capture of carbon dioxide, there has been proposed a gas separation unit including a carbon dioxide adsorption part having a pellet structure (see, for example, Patent Literature 1). In such a carbon oxide adsorption device, a fluid containing $CO_2$ is supplied so that a carbon oxide adsorption material adsorbs $CO_2$ from the fluid, and the adsorbed $CO_2$ is desorbed under predetermined conditions. However, the fluid supplied to the carbon oxide adsorption device may contain a poisoning and deteriorating component that deteriorates the carbon dioxide adsorption material. After the adsorption and the desorption of $CO_2$ are repeated in the carbon oxide adsorption device, the activity of the carbon dioxide adsorption material may be reduced by the poisoning and deteriorating component. In this case, it is required to stop the operation of the carbon dioxide adsorption device and then replace the entirety of a $CO_2$ adsorption part. Thus, there arise problems of troublesome replacement work and an increase in running cost.

Citation List

Patent Literature

[PTL 1] WO 2014/170184 A1

Summary of Invention

Technical Problem

A primary object of the present invention is to provide an acid gas adsorption device that allows an acid gas adsorption part, which has been deteriorated, to be partly replaced so as to achieve a reduction in running cost.

Solution to Problem

[1] According to an embodiment of the present invention, there is provided an acid gas adsorption device including an acid gas adsorption part that allows passage of a fluid in a predetermined direction. The acid gas adsorption part includes an acid gas adsorption material capable of adsorbing an acid gas. The acid gas adsorption part is divided into at least: a first adsorption portion including an upstream end surface in the direction of passage of the fluid; and a second adsorption portion positioned on a downstream side of the first adsorption portion in the direction of passage of the fluid.

[2] In the acid gas adsorption device according to the above-mentioned item [1], the acid gas may be carbon dioxide.

[3] In the acid gas adsorption device according to the above-mentioned item [1] or [2], a dimension of the second adsorption portion may be substantially the same as a dimension of the first adsorption portion in the direction of passage of the fluid.

[4] In the acid gas adsorption device according to any one of the above-mentioned items [1] to [3], the first adsorption portion and/or the second adsorption portion may be divided into a plurality of blocks in a direction intersecting with (preferably, a direction orthogonal to) the direction of passage of the fluid.

[5] The acid gas adsorption device according to any one of the above-mentioned items [1] to [4] may further include one case. The one case may house the first adsorption portion and the second adsorption portion together.

Advantageous Effects of Invention

According to the embodiments of the present invention, an acid gas adsorption device that allows the acid gas adsorption part, which has been deteriorated, to be partly replaced so as to achieve a reduction in running cost can be achieved.

Brief Description of Drawings

FIG. **1** is a schematic configuration view of an acid gas adsorption device according to one embodiment of the present invention.

FIG. **2** is a schematic configuration view of an acid gas adsorption device according to another embodiment of the present invention.

FIG. **3** is a schematic configuration view of an acid gas adsorption device according to still another embodiment of the present invention.

FIG. **4** is a schematic configuration view of a first block of FIG. **3** according to one embodiment.

FIG. **5** is a schematic perspective view of the first block of FIG. **3.**

FIG. **6** is an axial sectional view of the first block of FIG. **5.**

FIG. **7** is a schematic explanatory view for illustrating a step of removing a first adsorption portion from the acid gas adsorption device of FIG. **3.**

FIG. **8** is a schematic explanatory view for illustrating a step of adding a new adsorption portion to the acid gas adsorption device of FIG. **7.**

Description of Embodiments

Embodiments of the present invention are described below with reference to the drawings. However, the present invention is not limited to these embodiments. For clearer illustration, some widths, thicknesses, shapes, and the like of respective portions may be schematically illustrated in the drawings in comparison to the embodiments. However, the widths, the thicknesses, the shapes, and the like are merely an example, and do not limit understanding of the present invention.

A. Overview of Acid Gas Adsorption Device

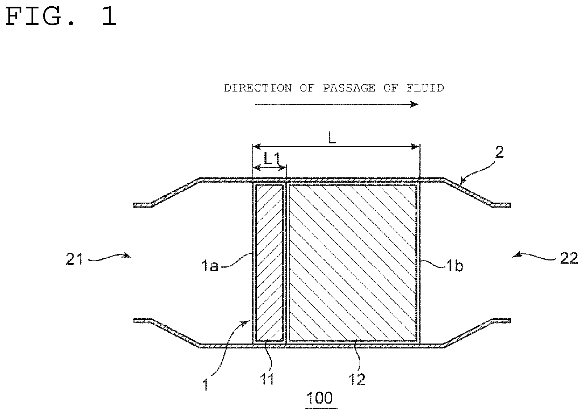

FIG. **1** is a schematic configuration view of an acid gas adsorption device according to one embodiment of the present invention.

An acid gas adsorption device **100** of the illustrated example includes an acid gas adsorption part **1** that allows passage of a fluid in a predetermined direction. The acid gas adsorption part **1** includes an acid gas adsorption material capable of adsorbing an acid gas. The acid gas adsorption part **1** is divided into at least a first adsorption portion **11** and a second adsorption portion **12**. The first adsorption portion **11** includes an upstream end surface **1a** of the acid gas adsorption part **1** in the direction of passage of the fluid. The second adsorption portion **12** is arranged on a downstream side of the first adsorption portion **11** in the direction of passage of the fluid. The second adsorption portion **12** is typically adjacent to the first adsorption portion **11**.

The fluid to be supplied to the acid gas adsorption device sometimes contains a poisoning and deteriorating component that deteriorates the acid gas adsorption material. The fluid passes through the first adsorption portion and the second adsorption portion in the stated order. Thus, the poisoning and deteriorating component contained in the fluid is relatively more liable to adhere to the first adsorption portion, and hence an acid gas adsorption material in the first adsorption portion is more prone to deterioration than an acid gas adsorption material in the second adsorption portion. Thus, the lifetime of the first adsorption portion is shorter than the lifetime of the second adsorption portion. According to one embodiment of the present invention, the first adsorption portion having a relatively short lifetime and the second adsorption portion having a relatively long lifetime are separated from each other. Thus, the first adsorption portion and the second adsorption portion can be replaced separately based on their lifetimes. Hence, as compared to a case in which the entirety of the acid gas adsorption part is replaced, the acid gas adsorption part can be partly and smoothly replaced. As a result, time required for the replacement of the acid gas adsorption part can be reduced. Hence, the operation stop time period of the acid gas adsorption device can be shortened. Further, the first adsorption portion and the second adsorption portion can be replaced at appropriate timing in accordance with their lifetimes. Thus, running cost (specifically, cost for preparing a new adsorption portion and cost for disposal of the used adsorption portion) can be reduced.

Examples of the acid gas to be adsorbed in the acid gas adsorption device include carbon dioxide ($CO_2$), hydrogen sulfide, sulfur dioxide, nitrogen dioxide, dimethyl sulfide (DMS), and hydrogen chloride. In one embodiment, the acid gas is carbon dioxide ($CO_2$), and the fluid is a $CO_2$-containing gas. The $CO_2$-containing gas may contain nitrogen in addition to $CO_2$. The $CO_2$-containing gas is typically air (atmosphere). A concentration of $CO_2$ in the $CO_2$-containing gas before being supplied to the acid gas adsorption device is, for example, 100 ppm (on a volume basis) or more and 2 vol% or less.

Now, description is given in detail of a case in which the acid gas is carbon dioxide ($CO_2$). When the acid gas is $CO_2$, the acid gas adsorption material is a carbon dioxide adsorption material.

Any appropriate compound capable of adsorbing and desorbing $CO_2$ may be adopted as the carbon dioxide adsorption material. Examples of the carbon dioxide adsorption material include: nitrogen-containing compounds; ionic liquids; deep eutectic solvents; alkali compounds, such as sodium hydroxide and potassium hydroxide; carbonate salts, such as calcium carbonate and potassium carbonate; and hydrogen carbonate salts, such as calcium hydrogen carbonate and potassium hydrogen carbonate.

In one embodiment, the carbon dioxide adsorption material includes a nitrogen-containing compound.

More specific examples of the nitrogen-containing compound include: primary amines, such as monoethanolamine and polyvinylamine; secondary amines, such as diethanolamine, a cyclic amine, and N-(3-aminopropyl)diethanolamine; tertiary amines, such as methyldiethylamine and triethanolamine; ethyleneamine compounds such as tetraethylenepentamine; aminosilane coupling agents, such as aminopropyltrimethoxysilane, 3-aminopropyltriethoxysilane, N-(2-aminoethyl)-3-aminopropyltrimethoxysilane, and polyethyleneimine-trimethoxysilane; organic monomers each having a primary amino group to a tertiary amino group, such as ethyleneimine and a styrene having an amino group added thereto; organic polymers each having a primary amino group to a tertiary amino group, such as a linear polyethyleneimine, branched polyethyleneimines each having a primary amino group to a tertiary amino group, polyamidoamine, and polyvinylamine; piperazine compounds such as 1-(2-hydroxyethyl) piperazine; and organic/inorganic compounds each having an amino group added as a substituent thereto.

Of the carbon dioxide adsorption materials, methyldiethylamine, monoethanolamine, a cyclic amine, diethanolamine, tetraethylenepentamine, ethyleneimine, a linear polyethyleneimine, a branched polyethyleneimine, and organic/inorganic compounds each having an amino group added as a substituent thereto are preferred.

Those carbon dioxide adsorption materials may be used alone or in combination thereof.

The first adsorption portion **11** and the second adsorption portion **12** may include the same acid gas adsorption material among the above-mentioned acid gas adsorption materials (carbon oxide adsorption materials) or may include different acid gas adsorption materials. In one embodiment, the first adsorption portion **11** and the second adsorption portion **12** include the same acid gas adsorption material.

In one embodiment, the first adsorption portion **11** has hydrophobicity. Droplets such as rain may be entrained in the fluid to be supplied to the acid gas adsorption device. Further, after the adsorption and the desorption of the acid gas are repeated in the acid gas adsorption device, dew condensation water may be produced on the upstream side in the acid gas adsorption part. When such water intrudes into the acid gas adsorption part along with the fluid, the acid gas adsorption performance of the acid gas adsorption device may degrade due to elution of the acid gas adsorption material and/or dilution of the acid gas adsorption material.

Meanwhile, in one embodiment, the first adsorption portion including the upstream end surface has hydrophobicity. Thus, the intrusion of water into the acid gas adsorption part can be prevented. Hence, excellent acid gas adsorption performance can be stably maintained.

Such a first adsorption portion **11** typically includes an acid gas adsorption material having hydrophobicity (hereinafter referred to as "hydrophobic adsorption material").

The hydrophobic adsorption material is substantially insoluble in water. The hydrophobic adsorption material is typically in a liquid state under normal temperature and normal pressure (23°C, 0.1 MPa).

The solubility of the hydrophobic adsorption material in water is, for example, 1.0 g/100 g-$H_2O$ or less, preferably 0.8 g/100 g-$H_2O$ or less. The lower limit of the solubility of the hydrophobic adsorption material in water is typically 0.01 g/100 g-$H_2O$. When the solubility of the hydrophobic adsorption material in water falls within such ranges, excellent hydrophobicity can be stably imparted to the first adsorption portion. The solubility in water is measured based on, for example, a change in mass after a target object is immersed in water at 25°C for three hours so as to be dissolved therein.

The Hildebrand solubility parameter of the hydrophobic adsorption material at 25°C is, for example, from 7.0 $(cal/cm^3)^{1/2}$ to 11.0 $(cal/cm^3)^{1/2}$, preferably from 8.8 $(cal/cm^3)^{1/2}$ to 10.0 $(cal/cm^3)^{1/2}$. The Hildebrand solubility parameter can be calculated by, for example, the Fedors method described in "Polymer Engineering and Science, February, 1974, Vol. 14, No. 2, Page 147‑154" based on information from a functional group detected by structural analysis such as infrared spectroscopy or Raman spectroscopy, or can be calculated by a Hildebrand method.

The hydrophobic adsorption material in the first adsorption portion is specified by: for example, structural analysis such as infrared spectroscopy and Raman spectroscopy; mass analysis such as gas chromatography and liquid chromatography; or elemental analysis such as CHN elemental analysis and an electron probe microanalyzer (EPMA). When the first adsorption portion includes a plurality of kinds of hydrophobic adsorption materials, the Hildebrand solubility parameter (hereinafter sometimes referred to as "SP value") of the hydrophobic adsorption materials in the first adsorption portion is calculated as the total sum of products, each being a product of the volume ratio and the SP value of each of the hydrophobic adsorption materials.

More specifically, a sample having a columnar shape is first collected from a part of the first adsorption portion, which includes the hydrophobic adsorption material (typically, an acid gas adsorption material layer described later or a pellet-like adsorption material described later). Subsequently, elemental mapping images at the following nine positions in the sample are acquired at a 300-fold magnification by, for example, an electron probe microanalyzer (EPMA) capable of detecting a light element such as nitrogen.

A first position: a center on one end surface of the sample, a second position: an end on the one end surface, a third position: a midpoint of a line segment connecting the first position and the second position,

a fourth position: a center on a cross section at the middle of the sample in its lengthwise direction, which is taken in a direction perpendicular to the lengthwise direction, a fifth position: an end on the cross section, a sixth position: a midpoint of a line segment connecting the fourth position and the fifth position,
a seventh position: a center on another end surface of the sample, an eighth position: an end on the another end surface, a ninth position: a midpoint of a line segment connecting the seventh position and the eighth position.

Next, an area ratio (element ratio) of the plurality of hydrophobic adsorption materials is obtained from each of the above-mentioned elemental mapping images at the first position to the ninth position. After that, an average value of the obtained plurality of area ratios (element ratios) is calculated. Subsequently, a volume percentage (vol%) of each of the hydrophobic adsorption materials to the sum of volumes of the plurality of hydrophobic adsorption materials as 100 vol% is calculated.

Next, the products, each being a product of the volume ratio and the SP value of each of the hydrophobic adsorption materials, are added up. For example, when the first adsorption portion includes a first hydrophobic adsorption material A (SP value of 10, volume percentage of 70 vol%) and a second hydrophobic adsorption material B (SP value of 8, volume percentage of 30 vol%), the SP value of the hydrophobic adsorption materials in the first adsorption portion is calculated to be 9.4 $(cal/cm^3)^{1/2}$ by the following Expression (1) .

$$(10 \times 70/100) + (8 \times 30/100) = 9.4 \qquad (1)$$

The hydrophobic adsorption material is, for example, a material having hydrophobicity among the above-mentioned carbon dioxide adsorption materials. Specific examples of the hydrophobic adsorption material include amine compounds each having a hydrophobic group, ionic liquids, hydrophobic deep eutectic solvents, and nitrogen-containing carbon. The hydrophobic adsorption materials may be used alone or in combination thereof.

As a hydrophobic group in the amine compound, there are given, for example, an alkyl group such as a methyl group, and an aryl group such as a phenyl group. A specific example of the amine compound having a hydrophobic group is phenethylamine. The amine compounds each having a hydrophobic group may be used alone or in combination thereof.

The ionic liquid is a "salt" of a liquid formed only of an ion (an anion or a cation). Examples of the cation of the ionic liquid include: an ammonium-based ion, such as an imidazolium salt or a pyridinium salt; a phosphonium-based ion; a sulfonium salt; and an inorganic ion. Examples of the anion of the ionic liquid include: a halogen-based ion, such as a bromide ion or a triflate ion; a boron-based ion such as a tetraphenylborate ion; a phosphorus-based ion such as a hexafluorophosphate ion; and a sulfur-based ion such as an alkyl sulfonate ion. The ionic liquids may be used alone or in combination thereof.

Examples of the hydrophobic deep eutectic solvent include: organic compounds each containing a carboxylic acid typified by decanoic acid as a hydrogen-bond donor (HBD); ester-containing organic matters typified by phenyl salicylate; alcohols typified by decanol; phenols typified by thymol; ketone-containing organic matters typified by camphor; ammonium salts each having a halogen or a hydroxy anion typified by tetra-n-octyl ammonium bromide as a hydrogen-bond acceptor (HBA); amine compound salts each having a halogen or a hydroxy anion typified by triethylenetetramine chloride; organic compounds each containing a carboxylic acid typified by lauric acid; alcohols typified by menthol; and phenols typified by thymol. The hydrophobic deep eutectic solvents may be used alone or in combination thereof.

The first adsorption portion 11 having hydrophobicity may include particles having acid gas adsorption ability (hereinafter referred to as "acid gas-adsorbable particles") and a hydrophobic binder in place of the hydrophobic adsorption material. The acid gas-adsorbable particles and the hydrophobic binder can also impart appropriate hydrophobicity to the first adsorption portion.

The acid gas-adsorbable particles are each in a solid state under normal temperature and normal pressure (23°C, 0.1 MPaA (absolute pressure)). The first adsorption portion **11** typically includes a plurality of acid gas-adsorbable particles. The acid gas-adsorbable particles, under a state of being incorporated in the first adsorption portion **11,** may be primary particles, or may be secondary particles in which a plurality of primary particles aggregate.

The acid gas-adsorbable particles may be formed only of an acid gas adsorption material that is a solid under normal temperature and normal pressure or may be formed of an acid gas adsorption material and a carrier.

The acid gas adsorption material in the acid gas-adsorbable particles is, for example, the above-mentioned carbon oxide adsorption material. The acid gas adsorption material in the acid gas-adsorbable particles may be the above-mentioned hydrophobic adsorption material or may be a hydrophilic adsorption material being soluble in water.

The solubility of the hydrophilic adsorption material in water is, for example, more than 1.0 g/100 g-$H_2O$, preferably 3.0 g/100 g-$H_2O$ or more. The upper limit of the solubility of the hydrophilic adsorption material in water is typically 800 g/100 g-$H_2O$.

The Hildebrand solubility parameter (SP value) of the hydrophilic adsorption material at 25°C is, for example, from 11.5 $(cal/cm^3)^{1/2}$ to 24.0 $(cal/cm^3)^{1/2}$, preferably from 11.9 $(cal/cm^3)^{1/2}$ to 14.5 $(cal/cm^3)^{1/2}$. When the first adsorption portion includes a plurality of kinds of hydrophilic adsorption materials, the SP value of the hydrophilic adsorption materials is calculated in the same manner as that for the above-mentioned SP value of the hydrophilic adsorption materials.

The acid gas-adsorbable particles each preferably include a hydrophilic adsorption material.

The acid gas adsorption capacity of the hydrophilic adsorption material is typically larger than the acid gas adsorption capacity of the hydrophobic adsorption material. Thus, when the acid gas-adsorbable particles each include a hydrophilic adsorption material, the acid gas adsorption performance of the first adsorption portion can be improved as compared to a case in which the acid gas-adsorbable particles each include the hydrophobic adsorption material.

When the acid gas is $CO_2$, the $CO_2$ adsorption capacity of the acid gas adsorption material is evaluated as the amount of substance of $CO_2$ that can be adsorbed by 1 kg of the acid gas adsorption material (when the acid gas adsorption material is supported by a carrier, a total of 1 kg of the acid gas adsorption material and the carrier) under conditions of 25°C, 50%RH, and a $CO_2$ partial pressure of 15 kPa.

The $CO_2$ adsorption capacity of the hydrophilic adsorption material is, for example, 0.1 mol/kg-adsorption material or more, preferably 0.7 mol/kg-adsorption material or more, more preferably 1.0 mol/kg-adsorption material or more. The $CO_2$ adsorption capacity can be measured by, for example, a method described in Document 3-2-1, the Second Review Meeting (2) on Carbon Dioxide Capture and Storage in 2015.

The $CO_2$ adsorption capacity of the hydrophobic adsorption material is, for example, less than 2.0 mol/kg-adsorption material, for example, less than 1.0 mol/kg-adsorption material, for example, less than 0.7 mol/kg-adsorption material, or, for example, less than 0.1 mol/kg-adsorption material.

The hydrophilic adsorption material is, for example, an amine compound without a hydrophobic group. Specific examples of the amine compound without a hydrophobic group include a linear polyethyleneimine and a branched polyethyleneimine having a primary amino group to a tertiary amino group. The hydrophilic adsorption materials may be used alone or in combination thereof.

In the acid gas-adsorbable particles, the carrier supports the acid gas adsorption material. Any appropriate carrier may be adopted as the carrier. The carrier is preferably a porous carrier. When the carrier is a porous carrier, mesopores can be formed in a surface of the carrier, which is contactable with the acid gas. The porous carrier is described later in detail. In addition, from the viewpoint of thermal conductivity, a metal material may be adopted as the carrier. Examples thereof include: iron and steel materials, such as carbon steel and alloy steel; and non-ferrous metals, such as copper, aluminum, and nickel, and alloys thereof. In the case of the metal material, the shape of the carrier is not limited to a porous shape.

The acid gas-adsorbable particles are typically formed of any appropriate combination of the above-mentioned acid gas adsorption material and the above-mentioned carrier. Specific examples of the acid gas-adsorbable particles include amine-supported polymers, amine-supported MOF, and amine-supported nitrogen-doped carbon.

The mass ratio of the acid gas adsorption material to the carrier (acid gas adsorption material/carrier) is, for example, from 0.1 to 5, preferably from 1 to 3.

The hydrophobic binder is capable of binding the acid gas-adsorbable particles. The hydrophobic binder is typically an organic binder that is substantially insoluble in water.

The solubility of the hydrophobic binder in water is, for example, 1.0 g/100 g-$H_2O$ or less, preferably 0.5 g/100 g-$H_2O$ or less. The lower limit of the solubility of the hydrophobic binder in water is typically 0.01 g/100 g-$H_2O$. When the solubility of the hydrophobic binder in water falls within such ranges, excellent hydrophobicity can be stably imparted to the first adsorption portion.

The Hildebrand solubility parameter (SP value) of the hydrophobic binder at 25°C is, for example, from 5.0

$(cal/cm^3)^{1/2}$ to 11.0 $(cal/cm^3)^{1/2}$, preferably from 6.2 $(cal/cm^3)^{1/2}$ to 10.4 $(cal/cm^3)^{1/2}$. When the first adsorption portion includes a plurality of kinds of hydrophobic binders, the SP value of the hydrophilic binders is calculated in the same manner as that for the above-mentioned SP value of the hydrophobic adsorption material.

Examples of the hydrophobic binder include: fluorine polymers, such as polyvinylidene fluoride (PVDF), polytetrafluoroethylene (PTFE), a perfluoroalkoxyalkane (PFA), a perfluoroethylene propene copolymer (FEP), and an ethylene tetrafluoroethylene copolymer (ETFE); and amorphous plastics, such as polysulfone, polyvinylidene chloride, polyimide, polyvinyl chloride, and polyethersulfone (PES). The hydrophobic binders may be used alone or in combination thereof.

Of the hydrophobic binders, a fluorine polymer is preferred, and polyvinylidene fluoride is more preferred. When the hydrophobic binder contains a fluorine polymer (polyvinylidene fluoride), the hydrophobicity of the first adsorption portion can be further improved.

The weight average molecular weight Mw (in terms of polystyrene) of the hydrophobic binder is, for example, from 10,000 to 10,000,000, preferably from 200,000 to 1,000,000.

The content ratio of the hydrophobic binder is, for example, from 0.01 part by mass to 5.0 parts by mass, preferably from 0.12 part by mass to 1.0 part by mass with respect to 1 part by mass of the acid gas-adsorbable particles.

In one embodiment, the second adsorption portion **12** is formed so as to have an acid gas adsorption capacity larger than that of the first adsorption portion **11.** Such a second adsorption portion **12** typically includes an acid gas adsorption material having a larger acid gas adsorption capacity (hereinafter referred to as "large-capacity adsorption material") as compared to the above-mentioned hydrophobic material. When the second adsorption portion includes a large-capacity adsorption material, the acid gas can be stably adsorbed from the fluid in the second adsorption portion. Thus, even when the first adsorption portion has hydrophobicity, the adsorption performance of the entire acid gas adsorption device can be sufficiently ensured.

The $CO_2$ adsorption capacity of the large-capacity adsorption material is, for example, 1 mol/kg-adsorption material or more, preferably 3 mol/kg-adsorption material or more, more preferably 5 mol/kg-adsorption material or more.

The large-capacity adsorption material is, for example, the above-mentioned hydrophilic adsorption material, and is preferably a linear polyethyleneimine or a branched polyethyleneimine.

Further, the large-capacity adsorption material may be supported by the above-mentioned carrier so as to be formed as the acid gas-adsorbable particles. When the second adsorption portion **12** includes the acid gas-adsorbable particles, the second adsorption portion **12** preferably further includes a hydrophilic binder.

The hydrophilic binder is capable of binding the acid gas-adsorbable particles. The hydrophilic binder is an organic binder that is substantially soluble in water.

The solubility of the hydrophilic binder in water is, for example, more than 5 g/100 g-$H_2O$, preferably 10 g/100 g-$H_2O$ or more. The upper limit of the solubility of the hydrophilic binder in water is typically 80 g/100 g-$H_2O$.

The Hildebrand solubility parameter (SP value) of the hydrophilic binder at 25°C is, for example, from 11.5 $(cal/cm^3)^{1/2}$ to 24.0 $(cal/cm^3)^{1/2}$, preferably from 11.9 $(cal/cm^3)^{1/2}$ to 14.5 $(cal/cm^3)^{1/2}$. When the second adsorption portion includes a plurality of kinds of hydrophilic binders, the SP value of the hydrophilic binders is calculated in the same manner as that for the above-mentioned SP value of the hydrophobic adsorption materials except that a sample is collected from a part of the second adsorption portion, which includes the hydrophilic binders, (typically, an acid gas adsorption material layer described later or a pellet-like adsorption material described later).

Examples of the hydrophilic binder include watersoluble polymers, such as a (meth)acrylic resin, amylose, methyl cellulose, and polyvinyl alcohol. Of those, methyl cellulose is preferred. The term "(meth)acrylic resin" as used herein includes an acrylic resin and a methacrylic resin. The hydrophilic binders may be used alone or in combination thereof.

The weight average molecular weight Mw (in terms of polystyrene) of the hydrophilic binder is, for example, from 10,000 to 10,000,000, preferably from 200,000 to 1,000,000.

The content ratio of the hydrophilic binder is, for example, from 0.01 part by mass to 5.0 parts by mass, preferably from 0.12 part by mass to 1.0 part by mass with respect to 1 part by mass of the acid gas-adsorbable particles.

In one embodiment, the acid gas adsorption device **100** includes the acid gas adsorption part **1** including the first adsorption portion **11** and the second adsorption portion **12;** and one case **2.** The case **2** houses the acid gas adsorption part **1.** In other words, the one case **2** houses the first adsorption portion **11** and the second adsorption portion **12** together. As compared to a case in which the first adsorption portion and the second adsorption portion are housed in different cases, housing the first adsorption portion and the second adsorption portion together in one case enables a reduction in size of the acid gas adsorption device. Thus, facility cost can be kept low. Further, the amount of capture of the acid gas per area can be increased.

In the illustrated example, the case **2** has a tubular shape extending in the direction of passage of the fluid. That is, the direction of passage of the fluid and the axial direction of the case 2 are substantially parallel to each other. An upstream end portion of the case **2** in the direction of passage of the fluid is formed as a first opening **21.** A downstream end portion of the case **2** in the direction of passage of the fluid is formed as a second opening **22.** The acid gas adsorption part **1** is arranged between the first opening **21** and the second opening **22** in an internal space of the case **2**. The first adsorption portion **11** is arranged between the first opening **21** and the second adsorption portion **12**. The second adsorption portion **12** is arranged on a side opposite to the first opening **21** with respect to the first adsorption portion **11**. The fluid can pass through each of the first opening **21** and the second opening **22**.

A dimension L of the acid gas adsorption part **1** in the direction of passage of the fluid is not limited to any particular dimension as long as fan driving power is not increased due to a pressure loss, and is, for example, 0.5 m or more, preferably 0.6 m or more, and is, for example, 2.0 m or less, preferably 1.0 m or less. A dimension of the acid gas adsorption part **1** in a direction orthogonal to the direction of passage of the fluid is not limited to any particular dimension, and is, for example, 1.5 m or more, preferably 2.0 m or more, and is, for example, 4.0 m or less, preferably 3.0 m or less.

The first adsorption portion **11** includes the upstream end surface **1a** of the acid gas adsorption part **1** in the direction of passage of the fluid. The second adsorption portion **12** in the illustrated example includes a downstream end surface **1b** of the acid gas adsorption part **1** in the direction of passage of the fluid. The direction of passage of the fluid is typically orthogonal to each of the upstream end surface **1a** and the downstream end surface **1b** of the acid gas adsorption part **1**.

Any appropriate values may be used for the dimensions of the first adsorption portion **11** and the second adsorption portion **12** in the direction of passage of the fluid in accordance with the acid gas adsorption materials used therefor, respectively. In one embodiment, a dimension **L1** of the first adsorption portion **11** in the direction of passage of the fluid is, for example, 5% or more, preferably 10% or more, and is, for example, 50% or less, preferably 35% or less with respect to the full length L of the acid gas adsorption part **1**.

When the dimension of the first adsorption portion is equal to or more than the above-mentioned lower limit, the deterioration of the second adsorption portion that is arranged adjacent to the first adsorption portion due to a poisoning and deteriorating component can be stably suppressed. When the dimension of the first adsorption portion is equal to or less than the above-mentioned upper limit, the running cost can be further reduced.

A gap may be defined between the first adsorption portion **11** and the second adsorption portion **12** in the direction of passage of the fluid. Generally, in the acid gas adsorption part, the fluid more easily flows in the vicinity of a center and less easily flows in outer areas. In this regard, when a gap is defined between the first adsorption portion and the second adsorption portion, a variation in flow rate of the fluid in the acid gas adsorption part can be reduced. A dimension of the gap in the direction of passage of the fluid is, for example, 30% or less, preferably 10% or less with respect to the full length L of the acid gas adsorption part in the direction of passage of the fluid (sum of the dimension of the first adsorption portion and the dimension of the second adsorption portion in the direction of passage of the fluid). When the dimension of the gap is equal to or less than the upper limit described above, stagnation of the fluid between the first adsorption portion and the second adsorption portion can be suppressed. Hence, the fluid is allowed to smoothly flow from the first adsorption portion to the second adsorption portion.

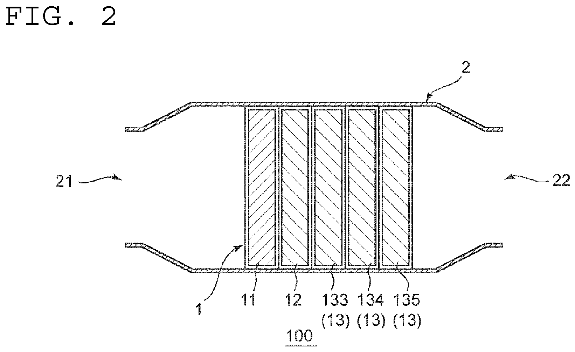

As illustrated in FIG. **2**, in one embodiment, the acid gas adsorption part **1** further includes an n-th adsorption portion **13** in addition to the first adsorption portion **11** and the second adsorption portion **12**. The number "n" is, for example, 3 or more and 30 or less. The n-th adsorption portion **13** is typically housed together with the first adsorption portion **11** and the second adsorption portion **12** in one case **2**. In the illustrated example, the acid gas adsorption part **1** includes a third adsorption portion **133**, a fourth adsorption portion **134**, and a fifth adsorption portion **135** in addition to the first adsorption portion **11** and the second adsorption portion **12**. In other words, the acid gas adsorption part **1** is divided into "n" portions in the direction of passage of the fluid. The third adsorption portion to the n-th adsorption portion are arranged in the stated order on the downstream side of the second adsorption portion in the direction of passage of the fluid. The n-th adsorption portion **13** may include the same acid gas adsorption material as that of the second adsorption portion **12** or may include an acid gas adsorption material different from that of the second adsorption portion **12**. Among the n-th adsorption portions **13**, the n-th adsorption portion **13** positioned on the most downstream side in the direction of passage of the fluid includes the downstream end surface **1b** of the acid gas adsorption part **1**. The first adsorption portion **11**, the second adsorption portion **12**, and the n-th adsorption portion **13** preferably include the same acid gas adsorption material.

A gap may be defined between adjacent adsorption portions among the second to n-th adsorption portions in the direction of passage of the fluid. The ranges of the dimension of the gap are the same as the above-mentioned ranges of the dimension of the gap between the first adsorption portion **11** and the second adsorption portion **12**.

In one embodiment, the dimension of the second adsorption portion in the direction of passage of the fluid is substantially the same as the dimension L1 of the first adsorption portion **11**. With such a configuration, when the first adsorption portion having a relatively short lifetime is to be replaced, the second adsorption portion having a relatively long lifetime can be used as the next first adsorption portion, which is described later in detail. In the specification of the present application, the expression "substantially the same dimension" encompasses a difference of l0 cm or less between the dimensions. Further, the dimension of the n-th adsorption portion in the direction of passage of the fluid is preferably substantially the same as the dimension L1 of the first adsorption portion **11**.

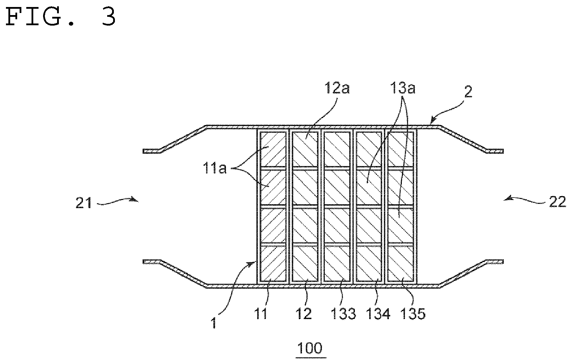

As illustrated in FIG. **3**, the first adsorption portion **11** may be divided into a plurality of first blocks **11a** in a direction intersecting with (preferably a direction orthogonal to) the direction of passage of the fluid. In other words, the first adsorption portion **11** is formed of the plurality of first blocks **11a** arranged in the direction intersecting with (preferably the direction orthogonal to) the direction of passage of the fluid. With this arrangement, the first blocks, each being relatively small, are produced to form the first adsorption portion. Thus, as compared to a case in which the first adsorption portion is produced as one body, the first adsorption portion can easily be produced. Further, a portion (first block) of the first adsorption portion **11,** which is particularly prone to deterioration, can be separately replaced.

A dimension of the first block **11a** in the direction of passage of the fluid is, for example, 0.10 m or more, preferably 0.15 m or more, and is, for example, 0.30 m or less, preferably 0.20 m or less. A dimension of the first block **11a** in the direction orthogonal to the direction of passage of the fluid is, for example, 0.10 m or more, preferably 0.15 m or more, and is, for example, 0.80 m or less, preferably 0.60 m or less.

When the first adsorption portion **11** is formed of the plurality of first blocks **11a,** the plurality of first blocks **11a** may be formed as a collectively replaceable cartridge.

Adjacent first blocks **11a** among the plurality of first blocks **11a** may define a gap therebetween or may be in contact with each other in the direction intersecting with (preferably the direction orthogonal to) the direction of passage of the fluid.

In the illustrated example, the first adsorption portion **11** is divided into four blocks in the direction intersecting with the direction of passage of the fluid (preferably, in the direction orthogonal to the direction of passage of the fluid, in the up-and-down direction on the drawing sheet). The number of division of the first adsorption portion in the direction intersecting with (preferably the direction orthogonal to) the direction of passage of the fluid is not limited to the above-mentioned number. Further, the first adsorption portion **11** may also be divided into a plurality of blocks in the direction intersecting with the direction of passage of the fluid (preferably, in the direction orthogonal to the direction of passage of the fluid, in the depth direction on the drawing sheet). The number of division of the first adsorption portion in the direction intersecting with (preferably the direction orthogonal to) the direction of passage of the fluid is, for example, 2 or more and 300 or less.

The plurality of first blocks **11a** may include the same acid gas adsorption material or may include different acid gas adsorption materials.

In one embodiment, the second adsorption portion **12** may be divided into a plurality of second blocks **12a** in the direction intersecting with (preferably the direction orthogonal to) the direction of passage of the fluid. The second adsorption portion **12** is formed of the plurality of second blocks **12a** arranged in the direction intersecting with (preferably the direction orthogonal to) the direction of passage of the fluid. With this arrangement, the second blocks, each being relatively small, are produced to form the second adsorption portion. Thus, the second adsorption portion can easily be produced. Further, a portion (second block) of the second adsorption portion **12,** which is prone to deterioration, can be separately replaced.

Ranges of the dimensions of the second block **12a** are the same as the above-mentioned ranges of the dimensions of the first block **11a.**

When the second adsorption portion **12** is formed of the plurality of second blocks **12a,** the plurality of second blocks **12a** may be formed as a collectively replaceable cartridge.

Adjacent second blocks **12a** among the plurality of second blocks **12a** may define a gap therebetween or may be in contact with each other in the direction intersecting with (preferably the direction orthogonal to) the direction of passage of the fluid.

In the illustrated example, the second adsorption portion **12** is divided into four blocks in the direction intersecting with the direction of passage of the fluid (preferably, in the direction orthogonal to the direction of passage of the fluid, in the up-and-down direction on the drawing sheet). The number of division of the second adsorption portion in the direction intersecting with (preferably the direction orthogonal to) the direction of passage of the fluid is not limited to the above-mentioned number. Further, the second adsorption portion **12** may also be divided into a plurality of blocks in the direction intersecting with the direction of passage of the fluid (preferably, in the direction orthogonal to the direction of passage of the fluid, in the depth direction on the drawing sheet). The number of division of the second adsorption portion in the direction intersecting with (preferably the direction orthogonal to) the direction of passage of the fluid is, for example, 2 or more and 300 or less, preferably is the same as the number of division of the first adsorption portion.

The plurality of second blocks **12a** may include the same acid gas adsorption material or may include different acid gas adsorption materials.

In one embodiment, the n-th adsorption portion **13** may be divided into a plurality of n-th blocks **13a** in the direction intersecting with (preferably the direction orthogonal to) the direction of passage of the fluid. The n-th adsorption portion **13** is formed of the plurality of n-th blocks **13a** arranged in the direction intersecting with (preferably the direction orthogonal to) the direction of passage of the fluid. With this arrangement, the n-th blocks, each being relatively small, are produced to form the n-th adsorption portion. Thus, the n-th adsorption portion can easily be produced.

Ranges of the dimensions of the n-th block **13a** are the same as the above-mentioned ranges of the dimensions of the first block **11a.**

Adjacent n-th blocks **13a** among the plurality of n-th blocks may define a gap therebetween or may be in contact with each other in the direction intersecting with (preferably the direction orthogonal to) the direction of passage of the fluid.

In the illustrated example, the n-th adsorption portion **13** is divided into four blocks in the direction intersecting with the direction of passage of the fluid (preferably in the direction orthogonal to the direction of passage of the fluid, in the up-and-down direction on the drawing sheet). The number of division of the n-th adsorption portion in the direction intersecting with (preferably the direction orthogonal to) the direction of passage of the fluid is not limited to the above-mentioned number. Further, the n-th adsorption portion 13 may also be divided into a plurality of blocks in the direction intersecting with the direction of passage of the fluid (preferably in the direction orthogonal to the direction of passage of the fluid, in the depth direction on the drawing sheet). The number of division of the n-th adsorption portion in the direction intersecting with (preferably the direction orthogonal to) the direction of passage of the fluid is, for example, 2 or more and 300 or less, preferably is the same as the number of division of the first adsorption portion.

The plurality of n-th blocks **13a** may include the same acid gas adsorption material or may include different acid gas adsorption materials.

Now, a specific configuration of the acid gas adsorption part is described.

B. Acid Gas Adsorption Part

As described above, the acid gas adsorption part **1** includes the first adsorption portion **11** and the second adsorption portion **12.** Further, the acid gas adsorption part **1** may further include the n-th adsorption portion. The first to the n-th adsorption portions typically have the same configuration except for a difference in size. Further, the first adsorption portion **11** (integrally formed) illustrated in FIG. **1** and the first block **11a** illustrated in FIG. **3** have the same configuration except for a difference in size. Thus, the configuration of the first block **11a** illustrated in FIG. **3** is described in detail below.

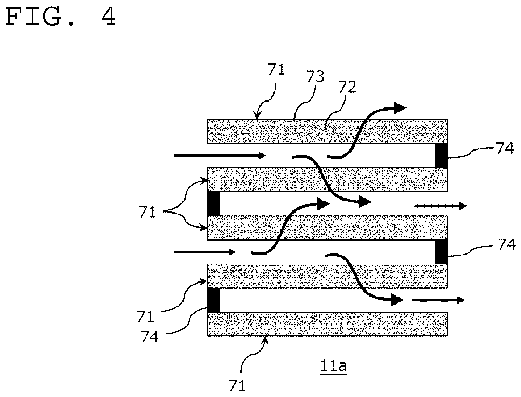

In one embodiment, as illustrated in FIG. **4,** the first block **11a** includes a plurality of adsorption material layers **71**.

The plurality of adsorption material layers **71** are stacked in a thickness direction thereof so as to be spaced apart from each other. In the illustrated example, five adsorption material layers **71** are arranged in parallel. However, the number of adsorption material layers **71** is not limited thereto. The number of adsorption material layers **71** is, for example, 5 or more, preferably 10 or more, more preferably 20 or more. A distance between adjacent adsorption material layers **71** among the plurality of adsorption material layers **71** is, for example, 0.5 cm or more and 1.5 cm or less.

Each of the plurality of adsorption material layers **71** includes a flexible fiber member **73** and a plurality of pellet-like adsorption materials **72.**

The flexible fiber member **73** permits passage of gas and restricts passage of the pellet-like adsorption materials. The flexible fiber member **73** is typically formed in a hollow shape (bag shape) that allows the plurality of pellet-like adsorption materials **72** to be contained therein. The flexible fiber member **73** may be a fabric or a non-woven fabric. Examples of a material for the flexible fiber member **73** include organic fibers and natural fibers, preferably, a polyethylene terephthalate fiber, a polyethylene fiber, and a cellulosic fiber. A thickness of the flexible fiber member **73** is, for example, 25 $\mu$m or more and 500 $\mu$m or less.

The plurality of pellet-like adsorption materials **72** are filled in the flexible fiber member **73** having a hollow shape (bag shape). The pellet-like adsorption material **72** serves as an acid gas adsorption material, and typically serves as a carbon dioxide adsorption material. Examples of a material for the pellet-like adsorption material **72** include a material modified with the above-mentioned acid gas adsorption material, preferably cellulose modified with the above-mentioned acid gas adsorption material, more preferably nanofibrillated cellulose modified with the above-mentioned acid gas adsorption material. A mean primary particle diameter of the pellet-like adsorption material **72** is, for example, 60 $\mu$m or more and 1,200 $\mu$m or less. Any appropriate value may be used as a filling ratio of the pellet-like adsorption materials **72** in the adsorption material layer **71**.

The acid gas adsorption device **7** of the illustrated example further includes a plurality of spacers **74.** The spacer **74** is located between adjacent adsorption material layers **71** among the plurality of adsorption material layers **71**. This configuration allows a distance between adjacent adsorption material layers among the adsorption material layers to be stably ensured. In one embodiment, the plurality of adsorption material layers **71** and the plurality of spacers **74** are arranged in a substantially zig-zag pattern when viewed from a direction

(depth direction on the drawing sheet of FIG. **1)** orthogonal to the thickness direction of the adsorption material layers **71.**

As the acid gas adsorption device **7** as described above, there is, for example, a gas separation unit as described in WO 2014/170184 A1. The publication is incorporated herein in its entirety by reference.

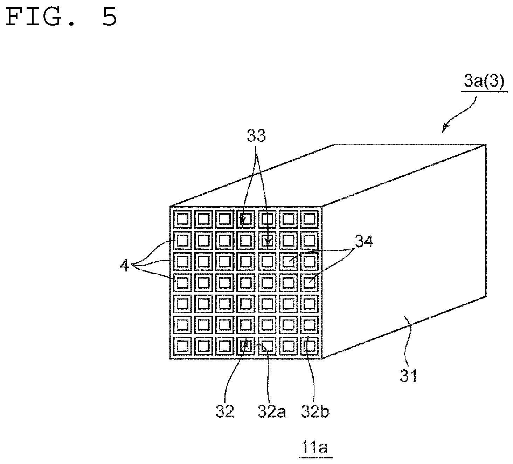

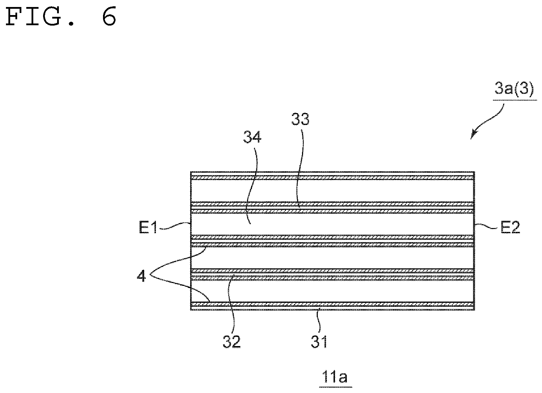

In another embodiment, as illustrated in FIG. **5** and FIG. **6,** the first block **11a** typically includes a base material **3** and acid gas adsorption layers **4.**

The structure of the base material 3 is not particularly limited, and is, for example, a honeycomb-like structure, a filter structure such as a filtration cloth, or a pellet structure. The acid gas adsorption layer **4** is not particularly limited as long as the layer is arranged on the surface of any such base material **3.**

B-1. Base Material (Honeycomb-like Base Material)

In one embodiment, the base material **3** is a honeycomb-like base material **3a**. The honeycomb-like base material **3a** includes partition walls **32** that define a plurality of cells **33**.

The cells **33** each extend from a first end surface **E1** (inflow end surface) of the honeycomb-like base material **3a** to a second end surface **E2** (outflow end surface) thereof in the lengthwise direction (axial direction) of the honeycomb-like base material **3a** (see FIG. **6).** The cells **33** each have any appropriate shape in a cross section in a direction perpendicular to the lengthwise direction of the honeycomb-like base material **3a.** The sectional shapes of the cells are each, for example, a triangle, a quadrangle, a pentagon, a hexagon, a higher polygon, a circle, or an ellipse. The sectional shapes and sizes of the cells may be all the same, or may be at least partly different. Of such sectional shapes of the cells, for example, a hexagon or a quadrangle is preferred, and a square, a rectangle, or a hexagon is more preferred.

A cell density in a cross section in the direction perpendicular to the lengthwise direction of the honeycomb-like base material (specifically, the number of cells **33** per unit area) may be appropriately set in accordance with purposes. The cell density may be, for example, from 4 cells/cm$^2$ to 320 cells/cm$^2$. When the cell density falls within such range, the strength and effective geometric surface area (GSA) of the honeycomb-like base material can be sufficiently ensured.

The honeycomb-like base material **3a** has any appropriate shape (overall shape). The shape of the honeycomb-like base material is, for example, a cylinder with a circle as its bottom, an elliptic cylinder with an ellipse as its bottom, a prismatic column with a polygon as its bottom, or a column with an indefinite shape as its bottom. The honeycomb-like base material **3a** of the illustrated example has a prismatic columnar shape. The outer diameter and length of the honeycomb-like base material may be appropriately set in accordance with purposes. The honeycomb-like base material may have a hollow region in a center portion thereof in the cross section in the direction perpendicular to the lengthwise direction, though the hollow region is not shown.

The honeycomb-like base material **3a** typically includes: an outer wall **31;** and a partition wall **32** positioned inside the outer wall **31.** In the illustrated example, the outer wall **31** and the partition wall **32** are integrally formed. The outer wall **31** and the partition wall **32** may be separate bodies.

In the illustrated example, the outer wall **31** has a rectangular cylindrical shape. The thickness of the outer wall **31** may be set to any appropriate thickness. The thickness of the outer wall **31** is, for example, from 0.1 mm to 10 mm.

The partition wall **32** defines the plurality of cells **33.** More specifically, the partition wall **32** has a first partition wall **32a** and a second partition wall **32b** perpendicular to each other, and the first partition wall **32a** and the second partition wall **32b** define the plurality of cells **33.** The sectional shapes of the cells **33** are each a substantially quadrangular shape. The configuration of the partition wall is not limited to the partition wall **32** described above. The partition wall may have a first partition wall extending in a radial direction and a second partition wall extending in a circumferential direction, which define a plurality of cells.

The thickness of the partition wall **32** may be appropriately set in accordance with the applications of the acid gas adsorption device. The thickness of the partition wall **32** is typically smaller than the thickness of the outer wall **31.** The thickness of the partition wall **32** is, for example, from 0.03 mm to 0.6 mm. The thickness of the partition wall is measured, for example, through sectional observation with a scanning electron microscope (SEM). When the thickness of the partition wall falls within such range, the honeycomb-like base material can achieve sufficient mechanical strength, and can also achieve a sufficient opening area (total area of the cells in a cross section).

The porosity of the partition wall **32** may be appropriately set in accordance with purposes. The porosity of the partition wall **32** is, for example, 15% or more, preferably 20% or more, and is, for example, 70% or less, preferably 45% or less. The porosity may be measured, for example, by mercury porosimetry.

The bulk density of the partition wall **32** may be appropriately set in accordance with purposes. The bulk density is, for example, 0.10 g/cm$^3$ or more, preferably 0.20 g/cm$^3$ or more, and is, for example, 0.60 g/cm$^3$ or less, preferably 0.50 g/cm$^3$ or less. The bulk density may be measured, for example, by mercury porosimetry.

A material for forming the partition wall **32** is typically, for example, a ceramic. Examples of the ceramic include silicon carbide, a silicon-silicon carbide-based composite material, cordierite, mullite, alumina, silicon nitride, spinel, a silicon carbide-cordierite-based composite material, lithium aluminum silicate, and aluminum titanate. Those materials for forming the partition walls may be used alone or in combination thereof. Of those materials for forming the partition walls, for example, cordierite, alumina, mullite, silicon carbide, a silicon-silicon carbide-based composite material, and silicon nitride are preferred, and silicon carbide and a silicon-silicon carbide-based composite material are more preferred.

Such honeycomb-like base material **3a** is typically produced by the following method. First, a binder and water or an organic solvent are added to material powder including ceramic powder described above as required. The resultant mixture is kneaded to provide a body, and the body is molded (typically extruded) into a desired shape. After that, the body is dried, and is fired as required. Thus, the honeycomb-like base material **3a** is produced. When the firing is adopted, the body is fired at, for example, from 1,200°C to 1,500°C. A firing time period is, for example, 1 hour or more and 20 hours or less.

B-2. Acid Gas Adsorption Layer (Carbon Dioxide Adsorption Layer)

In one embodiment, the acid gas adsorption layer **4** is formed on the surface of the partition wall **32**. In the honeycomb-like base material **3a,** a flow passage **34** is formed in a portion (typically, a center portion) in a cross section of the cell **33** in which the acid gas adsorption layer **4** is not formed. The acid gas adsorption layer **4** may be formed on the entire inner surface of the partition wall **32** (specifically, so as to surround the flow passage **34)** as in the illustrated example, or may be formed on part of the surface of the partition wall. When the acid gas adsorption layer **4** is formed on the entire inner surface of the partition wall **32,** an improvement in acid gas (typically, $CO_2$) adsorption efficiency can be achieved.

The flow passage **34** extends from the first end surface **E1** (inflow end surface) to the second end surface **E2** (outflow end surface) as with the cells **33**. Examples of the sectional shape of the flow passage **34** include the same sectional shapes as those of the cells **33** described above. Of those, for example, a hexagon or a quadrangle is preferred, and a square, a rectangle, or a hexagon is more preferred. The sectional shapes and sizes of the flow passage **34** may be all the same, or may be at least partly different.

The fluid containing the acid gas is typically supplied to the cells **33** (more specifically, the flow passages **34)** in an adsorption step described later.

The acid gas adsorption layer **4** includes the acid gas adsorption material in accordance with the acid gas to be adsorbed.

In one embodiment, the acid gas adsorption material layer **4** includes a porous carrier in addition to the above-mentioned acid gas adsorption material. In this case, the acid gas adsorption material is typically supported by the porous carrier to face the flow passage. When the acid gas adsorption material layer includes the porous carrier, the escape of the acid gas adsorption material from the acid gas adsorption material layer can be prevented in the adsorption step and/or the desorption step.

The porous carrier may form mesopores in the acid gas adsorption material layer. Examples of the porous carrier include: metal organic frameworks (MOF), such as MOF-74, MOF-200, and MOF-210; activated carbon; nitrogen-doped carbon; mesoporous silica; mesoporous alumina; zeolite; a carbon nanotube; and a fluorinated resin such as polyvinylidene fluoride (PVDF). Of those, for example, metal organic frameworks (MOF), activated carbon, PVDF, zeolite, mesoporous silica, and mesoporous alumina are preferred. Those porous carriers may be used alone or in combination thereof. A material different from that of the acid gas absorption material is preferably adopted for the porous carrier.

The BET specific surface area of the porous carrier is, for example, $50 \, m^2/g$ or more, preferably $500 \, m^2/g$ or more. When the surface area of the porous carrier is equal to or more than the above-mentioned lower limits, the acid gas adsorption material can be stably supported, and hence an improvement in acid gas adsorption efficiency can be achieved. The upper limit of the BET specific surface area of the porous carrier is typically $2,000 \, m^2/g$ or less.

When the acid gas adsorption material layer includes the acid gas adsorption material and the porous carrier, the content ratio of the total of the acid gas adsorption material and the porous carrier in the acid gas adsorption material layer is, for example, 30 mass% or more, preferably 50 mass% or more, and is, for example, 100 mass% or less, preferably 99 mass% or less.

The content ratio of the acid gas adsorption material in the acid gas adsorption material layer is, for example, 30 mass% or more, preferably 50 mass% or more, and is, for example, 99 mass% or less. The content ratio of the porous carrier is, for example, 0.01 part by mass or more, preferably 0.3 part by mass or more, and is, for example, 0.7 part by mass or less, preferably 0.5 part by mass or less with respect to 1 part by mass of the acid gas adsorption material. When the content ratio of the porous carrier falls within the above-mentioned ranges, the acid gas adsorption material can be more stably supported.

Further, the acid gas adsorption material layer may be formed only of the acid gas adsorption material. In this case, the acid gas adsorption material is directly supported by the partition wall **32** to face the flow passage. When the acid gas adsorption material layer is formed only of the acid gas adsorption material, the content ratio of the acid gas adsorption material in the acid gas adsorption material layer is typically 95.0 mass% or more and 100 mass% or less. When the content ratio of the acid gas adsorption material falls within the above-mentioned range, excellent acid gas adsorption efficiency can be stably ensured.

Such an acid gas adsorption material layer is typically produced by the following method. A solution of the acid gas adsorption material is prepared by dissolving the above-mentioned acid gas adsorption material in a solvent. Further, the above-mentioned porous carrier is added to the solvent as required. The order of addition of the acid gas adsorption material and the porous carrier is not limited to any particular order. After that, the solution of the acid gas adsorption material is applied onto the base material (specifically, the partition walls), and the coating film is then dried, and is sintered as required. Thus, the acid gas adsorption material layer is formed.

Further, the acid gas adsorption layers **4** may include the above-mentioned acid gas-adsorbable particles and the above-mentioned binder (hydrophobic binder or hydrophilic binder).

The content ratio of the total of the acid gas-adsorbable particles and the binder in the acid gas adsorption layer **4** is, for example, from 30 vol% to 100 vol%, preferably from 50 vol% to 99 vol%. The volume percentage may be measured, for example, through microstructure observation and elemental analysis.

The content ratio of the acid gas-adsorbable particles in the acid gas adsorption layer **4** is, for example, 5 vol% or more, preferably 30 vol% or more. The upper limit of the content ratio of the acid gas-adsorbable particles is typically 85 vol%. When the content ratio of the acid gas-adsorbable particles falls within such ranges, the acid gas adsorption performance of the acid gas adsorption device can be sufficiently ensured.

The content ratio of the binder in the acid gas adsorption layer **4** is, for example, 5 vol% or more, preferably 15 vol% or more. The upper limit of the content ratio of the binder is typically 70 vol%. When the content ratio of the binder falls within such ranges, the escape of the acid gas-adsorbable particles from the acid gas adsorption layer can be prevented in a capture method described later.

Such an acid gas adsorption material layer is typically produced by the following method. First, a binder solution in which the above-mentioned binder is dissolved in a solvent is prepared. Next, the acid gas-adsorbable particles are dispersed in the binder solution. After that, the binder solution in which the acid gas-adsorbable particles are dispersed is applied onto the base material (specifically, the partition wall), and the coating film is then dried to thereby form the acid gas adsorption material layer.

C. Method of Capturing Acid Gas

Next, a method of capturing an acid gas with use of the acid gas adsorption device according to one embodiment of the present invention is described. The method of capturing an acid gas typically includes the adsorption step and the desorption step in the stated order.

In the adsorption step, the fluid containing the acid gas is supplied to the acid gas adsorption part **1** adjusted to a predetermined adsorption temperature. At this time, the fluid containing the acid gas first flows into the first adsorption portion **11** (more specifically, the flow passages **34** of the first blocks **11a**) via the first opening **21** of the case **2**. As a result, the acid gas adsorption material of the first adsorption portion **11** adsorbs the acid gas from the fluid containing the acid gas (typically, $CO_2$). At this time, the poisoning and deteriorating component contained in the fluid may adhere to the acid gas adsorption layers **4** of the first adsorption portion **11.** After that, the fluid that has passed through the first adsorption portion **11** flows into the second adsorption portion **12.** As a result, the acid gas adsorption material in the second adsorption portion **12** adsorbs the acid gas from the fluid. Thus, the acid gas is adsorbed from the fluid supplied to the acid gas adsorption part. After that, the fluid that has passed through the first adsorption portion **11** and the second adsorption portion **12** in the stated order is discharged from the second opening **22.**

A temperature (adsorption temperature) of the acid gas adsorption part in the adsorption step is, for example, 0°C or more, preferably 10°C or more, and is, for example, 50°C or less, preferably 40°C or less. In one embodiment, the adsorption temperature is equal to an outside air temperature. An operation time period of the adsorption step (adsorption time) is, for example, 15 minutes or more, preferably 30 minutes or more, and is, for example, 3 hours or less, preferably 2 hours or less.

When the adsorption temperature and/or the adsorption time falls within the above-mentioned ranges, the acid gas adsorption material can efficiently adsorb the acid gas.

An acid gas adsorption rate in the adsorption step (=100-(concentration of the acid gas in the fluid having passed through the acid gas adsorption part/concentration of the acid gas in the fluid before being supplied to the acid gas adsorption part×100)) is, for example, 60% or more, preferably 75% or more, more preferably 80% or more, and is, for example, 90% or less.

Next, in the desorption step, the acid gas adsorption part **1** is typically heated to a desorption temperature exceeding the adsorption temperature. More specifically, in the desorption step, after the temperature of the acid gas adsorption part **1** is raised to the adsorption temperature, the acid gas adsorption part **1** is maintained at the desorption temperature for predetermined desorption time. As a result, the acid gas, which has been adsorbed by the acid gas adsorption material in the adsorption step, is desorbed from the acid gas adsorption material. Thus, the desorbed acid gas can be captured.

In one embodiment, in the desorption step, the desorbed gas is supplied to the acid gas adsorption part **1** so as to pass through the first adsorption portion **11** and the second adsorption portion **12** in the stated order. As a result, the desorbed acid gas is captured together with the desorbed gas. The gas captured in the desorption step is sometimes referred to as "captured gas." The desorbed gas is preferably a captured gas that has previously been captured by the acid gas adsorption device. The use of the captured gas as the desorbed gas enables achievement of an increase in concentration of the acid gas in the captured gas.

In the desorption step, the acid gas can also be captured without using the desorbed gas. For example, the desorbed acid gas may be sucked and captured by a decompression pump. Further, the desorbed gas and the decompression pump can be used in combination.

The temperature of the acid gas adsorption part in the desorption step (desorption temperature) is, for example, 70°C or more, preferably 80°C or more, and is, for example, 200°C or less, preferably 110°C or less. An operation time period of the desorption step (desorption time for which the acid gas adsorption part is maintained at the desorption temperature) is, for example, 1 minute or more, preferably 5 minutes or more, and is, for example, 1 hour or less, preferably 30 minutes or less. When the desorption temperature and/or the desorption time falls within the above-mentioned ranges, the acid gas can be sufficiently desorbed from the acid gas adsorption material.

With the method described above, the acid gas can be efficiently captured. The adsorption step and the desorption step are preferably repeated in the order. In one embodiment, a cycle of the adsorption step and the desorption step may be performed, for example, 10 times or more, preferably 30 times or more, more preferably 50 times or more, still more preferably 100 times or more.

D. Replacement Method

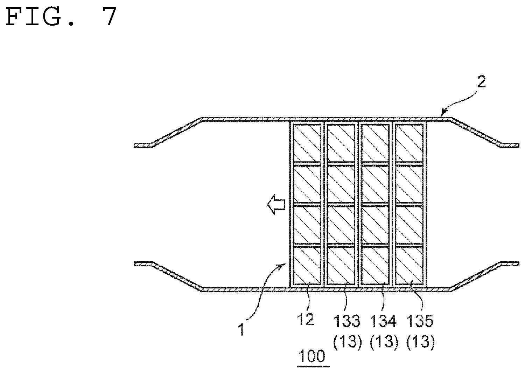

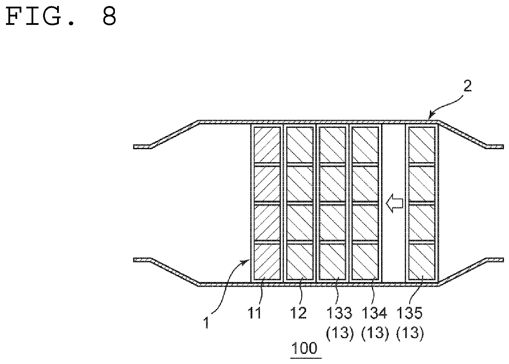

Next, a method of replacing the first adsorption portion in one embodiment of the present invention is described.
In one embodiment, after the adsorption step and the desorption step are carried out (preferably, the cycles of the adsorption step and the desorption step are carried out within the above-mentioned ranges), the first adsorption portion is replaced. The replacement of the first adsorption portion may be carried out after the acid gas adsorption rate in the adsorption step becomes less than the above-mentioned lower limit.
In the method of replacing the first adsorption portion, the used first adsorption portion **11** is first taken out of the case **2**. The first adsorption portion **11** is taken from the case **2** to the outside, for example, via the opening of the case **2**. Further, a part of the case **2** on the upstream side of the acid gas adsorption part **1** may be removed so that the first adsorption portion **11** is taken out of the case **2**.
After that, in one embodiment, a new first adsorption portion **11** is inserted into the case **2**. Thus, the replacement of the first adsorption portion is completed.
Further, as illustrated in FIG. **7,** when the dimensions of the second adsorption portion **12** are the same as the dimensions of the first adsorption portion **11,** the second adsorption portion **12** is moved to the upstream side in the direction of passage of the fluid after the used first adsorption portion **11** is taken out of the case **2.** As a result, the second adsorption portion **12** can serve as the next first adsorption portion **11.** In this manner as well, the first adsorption portion can be replaced.
Further, when the acid gas adsorption part **1** includes the n-th adsorption portion **13** (third adsorption portion **133**), the n-th adsorption portion **13** (third adsorption portion **133**) may be moved to the upstream side in the direction of passage of the fluid so as to serve as the next second adsorption portion **12.**
After that, as illustrated in FIG. **8,** an n-th adsorption portion is added to a downstream end portion of the acid gas adsorption part **1** in the direction of passage of the fluid as required. The new n-th adsorption portion is inserted into the case **2,** for example, via the opening of the case **2.** Further, a part of the case **2** on the downstream side of the acid gas adsorption part **1** may be removed so that the new n-th adsorption portion is placed inside the case **2.**

Industrial Applicability

The acid gas adsorption device according to the embodiment of the present invention can be used for separation and capture of an acid gas, and particularly, can be suitably used for a Carbon dioxide Capture, Utilization and Storage (CCUS) cycle.

Reference Signs List

| | |
|---|---|
| **1** | acid gas adsorption part |
| **11** | first adsorption portion |
| **12** | second adsorption portion |
| **2** | case |

**Claims**

1. An acid gas adsorption device, comprising:

an acid gas adsorption part, which includes an acid gas adsorption material capable of adsorbing an acid gas, and allows passage of a fluid in a predetermined direction; and
one case,
wherein the acid gas adsorption part is divided into at least:

a first adsorption portion including an upstream end surface in the direction of passage of the fluid; and a second adsorption portion positioned on a downstream side of the first adsorption portion in the direction of passage of the fluid,

wherein the one case houses the first adsorption portion and the second adsorption portion together, and wherein the first adsorption portion and/or the second adsorption portion is divided into a plurality of blocks in a direction intersecting with the direction of passage of the fluid.

2. The acid gas adsorption device according to claim 1, wherein the acid gas is carbon dioxide.

3. The acid gas adsorption device according to claim 1 or 2, wherein a dimension of the second adsorption portion is substantially the same as a dimension of the first adsorption portion in the direction of passage of the fluid.

FIG. 1

DIRECTION OF PASSAGE OF FLUID

100

FIG. 2

100

FIG. 3

100

FIG. 4

FIG. 5

FIG. 6

11a

FIG. 7

# FIG. 8

## INTERNATIONAL SEARCH REPORT

| International application No. |
|---|
| **PCT/JP2023/031207** |

**A. CLASSIFICATION OF SUBJECT MATTER**

*B01D 53/04*(2006.01)i
FI:   B01D53/04 110

According to International Patent Classification (IPC) or to both national classification and IPC

**B. FIELDS SEARCHED**

Minimum documentation searched (classification system followed by classification symbols)

B01D53/02-53/12; B01D53/14-53/18

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | Microfilm of the specification and drawings annexed to the request of Japanese Utility Model Application No. 123632/1981 (Laid-open No. 031022/1983) (UBE INDUSTRIES) 01 March 1983 (1983-03-01), fig. 1, description of explanations thereof | 1, 3 |
| Y | | 2 |
| X | JP 2013-163156 A (JFE ENGINEERING CORP.) 22 August 2013 (2013-08-22) fig. 6, 7, description of explanations thereof | 1, 3 |
| Y | | 2 |
| X | JP 2003-053119 A (OKUTO GOSHI KAISHA) 25 February 2003 (2003-02-25) fig. 1, description of explanations thereof | 1 |
| Y | | 2 |
| Y | JP 2021-058856 A (JFE STEEL CORP.) 15 April 2021 (2021-04-15) paragraph [0030] | 2 |
| A | JP 2016-221428 A (UBE INDUSTRIES, LTD.) 28 December 2016 (2016-12-28) entire text, all drawings | 1-3 |

☑ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **18 October 2023** | **31 October 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

International application No.

**PCT/JP2023/031207**

### C. DOCUMENTS CONSIDERED TO BE RELEVANT

| Category* | Citation of document, with indication, where appropriate, of the relevant passages | Relevant to claim No. |
|---|---|---|
| A | JP 07-332073 A (MAZDA MOTOR CORP.) 19 December 1995 (1995-12-19)<br>entire text, all drawings | 1-3 |
| A | JP 2000-157620 A (HITACHI, LTD.) 13 June 2000 (2000-06-13)<br>entire text, all drawings | 1-3 |

Form PCT/ISA/210 (second sheet) (January 2015)

## INTERNATIONAL SEARCH REPORT
### Information on patent family members

International application No.

**PCT/JP2023/031207**

| Patent document cited in search report | | | Publication date (day/month/year) | Patent family member(s) | Publication date (day/month/year) |
|---|---|---|---|---|---|
| JP | 58-031022 | U1 | 01 March 1983 | (Family: none) | |
| JP | 2013-163156 | A | 22 August 2013 | (Family: none) | |
| JP | 2003-053119 | A | 25 February 2003 | (Family: none) | |
| JP | 2021-058856 | A | 15 April 2021 | (Family: none) | |
| JP | 2016-221428 | A | 28 December 2016 | (Family: none) | |
| JP | 07-332073 | A | 19 December 1995 | (Family: none) | |
| JP | 2000-157620 | A | 13 June 2000 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014170184 A1

**Non-patent literature cited in the description**

- *Polymer Engineering and Science*, February 1974, vol. 14 (2), 147-154